Europäisches Patentamt

European Patent Office

Office européen des brevets

(19)

(11) **EP 1 255 319 A2**

(12) **EUROPEAN PATENT APPLICATION**

(43) Date of publication:
06.11.2002 Bulletin 2002/45

(51) Int Cl.[7]: **H01M 10/40**, H01M 2/16,
H01M 10/42

(21) Application number: 02005110.8

(22) Date of filing: 07.03.2002

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Yoshida, Toshihiro**<br>  **Nagoya-city, Aichi-prefecture, 467-8530 (JP)**<br>• **Nemoto, Hiroshi**<br>  **Nagoya-city, Aichi-prefecture, 467-8530 (JP)** |
| (30) Priority: **02.05.2001 JP 2001134943**<br>**16.10.2001 JP 2001317893** | (74) Representative:<br>**Leson, Thomas Johannes Alois, Dipl.-Ing.**<br>**Tiedtke-Bühling-Kinne & Partner GbR,**<br>**TBK-Patent,** |
| (71) Applicant: **NGK INSULATORS, LTD.**<br>**Nagoya-City, Aichi Prefecture 467-8530 (JP)** | **Bavariaring 4**<br>**80336 München (DE)** |

(54) **Electrode body evaluation method and lithium secondary cell using the same**

(57) There is provided a method of evaluating an electrode body impregnated with a non-aqueous electrolyte, comprising a positive electrode and a negative electrode wound or laminated with a separator inserted in between. The discharge limit of the electrode body is evaluated by means of affinity of the non-aqueous electrolyte for the separator. This method is capable of selecting an optimal combination between a separator and non-aqueous electrolyte and evaluating a discharge limit of the electrode body before finally manufacturing a lithium secondary cell.

EP 1 255 319 A2

Printed by Jouve, 75001 PARIS (FR)

**Description**

Background of the Invention and Related Art Statement

The present invention relates to a method of evaluating an electrode body, a lithium secondary cell using the same and a method of manufacturing a separator used for the lithium secondary cell.

A lithium secondary cell is being widely used as a small chargeable/dischargeable secondary cell with a large energy density, which provides a power supply for electronic devices such as portable type communication devices and notebook personal computers in recent years. Furthermore, as concerns over resource saving and energy saving against a background of worldwide protection of global environment are growing, a lithium secondary cell is also expected as a battery for driving a motor of an electric vehicle (EV) or hybrid electric vehicle (HEV) (the aggressive introduction of these vehicles is under consideration in the automobile industry) or effective means for using electric power by storing nighttime electric power and there is a strong demand for practical use of a large capacity lithium secondary cell suitable for these applications.

For a lithium secondary cell, a lithium transition metal compound oxide, etc. is generally used as the positive electrode active material, while a carbon-based material such as hard carbon and graphite is used as the negative electrode active material. Since the reaction potential of the lithium secondary cell is as high as about 4.1 V, a conventional water-based electrolyte cannot be used for its electrolyte. Instead, a non-aqueous electrolyte is used which is a lithium compound constituting the electrolyte is dissolved into an organic solvent. Charging reaction occurs when $Li^+$ in the positive electrode active material moves through the non-aqueous electrolyte to the negative electrode active material and is captured there, and reverse battery reaction occurs during discharge.

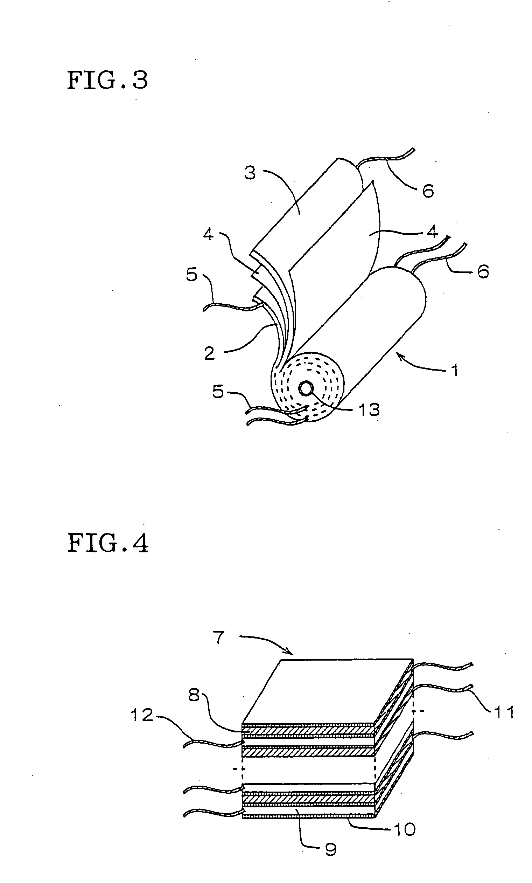

As a lithium secondary cell with a relatively large capacity which is preferably used in an EV and HEV, etc. among these lithium secondary cells, a wind type electrode body 1 shown in Fig. 3 is preferably used which comprises a positive electrode 2 and negative electrode 3 with a positive electrode tab 5 and negative electrode tab 6 (which function as lead wires and hereafter will be referred to as "tabs") attached respectively, and a separator 4 inserted in between so that the two plates do not contact with each other, wound around the outer wall of a core 13.

The electrode plates 2 and 3 are formed by forming electrode active materials (referring to both the positive electrode active material and negative electrode active material) on both sides of a collector substrate such as a metallic foil and the tabs 5 and 6 can be attached to the areas of the electrode plates 2 and 3 where metallic foils at the edges are exposed at predetermined intervals while winding the electrode plates 2 and 3 and separator 4 around the core 13 using means such as ultrasonic welding.

On the other hand, as shown in a perspective view of Fig. 4, a laminate type electrode body 7 has a structure comprising a positive electrode 8 and negative electrode 9 having a certain area and predetermined shape placed one atop another with a separator 10 inserted between the both plates and each of the positive electrode 8 and negative electrode 9 is provided with at least one tab 11 and one tab 12 (positive electrode tab 11 and negative electrode tab 12). The materials used for and the method of manufacturing the positive electrode 8 and negative electrode 9 are the same as those for the electrode plates 2 and 3, etc. in the wind type electrode body 1 shown in Fig. 3.

Here, the batteries used for an EV or HEV, etc. are required not only to have a large capacity but also to discharge a high instantaneous current for engine starting or hill climbing in particular. That is, there is a demand for the development of batteries characterized by a higher limit discharge current value.

In order to evaluate whether or not a battery is provided with such a characteristic or a characteristic that will clear a predetermined standard, it is necessary to perform characteristic evaluations after actually manufacturing the batteries through various processes including the manufacture of the electrode body. That is, there are problems in the preliminary step toward the battery manufacturing process such that it is difficult to evaluate beforehand characteristics such as a discharge limit (limit discharge current), etc. which will be provided for the battery, thus reducing manufacturing yields, etc.

When focused on a separator made of a porous film such as polyolefin inserted between the positive and negative electrodes here, the separator does not always have excellent wettability, that is, affinity and permeability with respect to a non-aqueous electrolyte. Especially, the type and composition of the non-aqueous electrolyte showing affinity and permeability vary depending on the material composing the separator and physical properties such as air permeability and porosity.

Therefore, if a battery is manufactured by combining a separator and non-aqueous electrolyte which have not good affinity or using a separator with low permeability, it may take a long time to impregnate the battery with the non-aqueous electrolyte or the non-aqueous electrolyte may not be distributed uniformly in the battery. Moreover, if the electrolyte is not maintained satisfactorily in the separator, this may adversely affect the battery characteristics such as a battery capacity and cyclic characteristic, and therefore it is important to select an optimal combination of the separator and non-aqueous electrolyte.

Japanese Patent Laid-Open No.11-300180 discloses a porous resin film with specified thickness, porosity, air permeability and wettability with respect to a predetermined organic solvent. However, there is a demand for an evaluation method capable of selecting a more suitable combination between the separator and non-aqueous electrolyte than the porous resin film described in the above-described publication.

Summary of the Invention

The present invention has been implemented taking into account the problems of conventional arts described above and it is an object of the present invention to provide a method for evaluating an electrode body capable of selecting beforehand an optimal combination between the separator and non-aqueous electrolyte before finally manufacturing a lithium secondary cell and evaluating the discharge limit of the electrode body, a lithium secondary cell with a high limit discharge current provided with the electrode body manufactured using the selected separator and non-aqueous electrolyte selected using the above-described evaluation method as well as a method of manufacturing a separator ideally applicable to the above-described lithium secondary cell and with reduced manufacturing cost.

That is, the present invention provides An evaluation method of an electrode body comprising: providing the electrode body impregnated with a non-aqueous electrolyte comprising a positive electrode and a negative electrode wound or laminated with a separator inserted in between, evaluating a discharge limit of said electrode body according to affinity between said separator and said non-aqueous electrolyte or an organic solvent composing said non-aqueous electrolyte.

It is preferable in the present invention that a certain amount of the non-aqueous electrolyte or the organic solvent be dropped onto the separator and the above-described affinity be evaluation based on a reduction rate of a contact angle formed by the separator and the non-aqueous electrolyte or the organic solvent measured immediately after the dropping and after a certain lapse of time after the dropping.

Furthermore, it is preferable in the present invention that when a contact angle measured immediately after the dropping is $\theta_1$ and a contact angle measured 15 minutes after the dropping is $\theta_2$, a combination between the separator that satisfies a relation expressed in the following Expression (1) and the non-aqueous electrolyte or the organic solvent be decided to be good affinity and that the contact angle measured immediately after the dropping be 60° or less.

$$(\theta_1 - \theta_2)/ \theta_1 > 0.4 \tag{1}$$

It is preferable in the present invention that the affinity is evaluated under a temperature condition of 10 to 40°C.

Furthermore, the present invention provides an evaluation method of an electrode body comprising: providing the electrode body impregnated with a non-aqueous electrolyte comprising a positive electrode and a negative electrode wound or laminated with a separator inserted in between, evaluating a discharge limit of said electrode body by permeability of said non-aqueous electrolyte or an organic solvent composing said non-aqueous electrolyte with respect to said separator.

It is preferable in the present invention that the non-aqueous electrolyte or the organic solvent be contacted with the separator and that the permeability be evaluated by the penetration rate of the non-aqueous electrolyte or the organic solvent expressed by the amount of the non-aqueous electrolyte or the organic solvent that has passed through the separator per unit time and per unit area.

It is further preferable in the present invention that the amount of the non-aqueous electrolyte or the organic solvent that has passed for a lapse of time of two or more be measured and that the permeability be expressed by a gradient of a regression line formed by the measured amount of penetration of two or more.

It is preferable in the present invention that the discharge limit of the electrode body be decided to be good when the penetration rate is 0.25 mg/min·cm$^2$ or more, more preferably decided to be good when the penetration rate is 2 mg/min·cm$^2$ or more and most preferably decided to be good when the penetration rate is 50 mg/min·cm$^2$ or more.

It is preferable in the present invention that the permeability be evaluated under a temperature condition of 10 to 40°C.

It is preferable in the present invention that olefin resin be used as the material for the separator and that the material of the separator be cellulose or cellulose derivative or paper made of a mixture of these materials.

It is preferable in the present invention that a lithium compound be used as an electrolyte to be dissolved into the organic solvent and it is further preferable that LiPF$_6$ be used as the lithium compound.

It is also preferable in the present invention that a mixed solvent of ring-shaped carbonate and chain-shaped carbonate be used as the organic solvent.

The electrode body evaluation method of the present invention is ideally applicable to evaluate a wind type electrode body and ideally applicable to evaluate the electrode body of the lithium secondary cell.

Furthermore, the present invention provides a lithium secondary cell comprising: a cell case, and an electrode body provided with a positive electrode made of a positive electrode active material and a negative electrode made of a negative electrode active material contained in the cell case, wound or laminated with a separator inserted in between and impregnated with a non-aqueous electrolyte made of a lithium compound dissolved into an organic solvent, wherein when said non-aqueous electrolyte or said organic solvent is dropped onto said separator and a contact angle measured immediately after the dropping is $\theta_1$ and a contact angle measured 15 minutes after the dropping is $\theta_2$, said separator and said non-aqueous electrolyte or said organic solvent satisfy a relation expressed in the following Expression (2).

$$(\theta_1 - \theta_2)/\theta_1 > 0.4 \qquad\qquad (2)$$

It is preferable in the present invention that the contact angle measured immediately after the dropping be 60° or less.

Furthermore, the present invention provides a lithium secondary cell comprising: a cell case, and an electrode body provided with a positive electrode made of a positive electrode active material and a negative electrode made of a negative electrode active material contained in the cell case, wound or laminated with a separator inserted in between and impregnated with a non-aqueous electrolyte made of a lithium compound dissolved into an organic solvent, wherein when said non-aqueous electrolyte or said organic solvent is contacted with said separator and the penetration rate of said non-aqueous electrolyte or said organic solvent expressed with the amount of said non-aqueous electrolyte or said organic solvent that has passed through said separator per unit time and per unit area is expressed with a gradient of a regression line formed by the amount of said non-aqueous electrolyte or said organic solvent that has passed which is equal to 2 or more measured for a lapse of time equal to 2 or more, said penetration rate is equal to or more than 0.25 mg/min·cm$^2$.

It is preferable in the present invention that the penetration rate be equal to or more than 2 mg/min·cm$^2$ and more preferably 50 mg/min·cm$^2$ or more.

It is also preferable in the present invention that the lithium compound be $LiPF_6$. It is also preferable in the present invention that the material of the separator be olefin resin and it is further preferable that the material of the separator be cellulose or cellulose derivative or paper made of a mixture of these materials.

It is also preferable in the present invention that the material of the separator be a nonwoven fabric textile made of fabric polyolefin and the penetration rate be 2 to 30000 mg/mm·cm$^2$ and it is more preferable that the penetration rate be 50 to 5000 mg/min·cm$^2$.

The present invention provides a lithium secondary cell comprising: a cell case, and an electrode body provided with a positive electrode made of a positive electrode active material and a negative electrode made of a negative electrode active material contained in the cell case, wound or laminated with a separator inserted in between and impregnated with a non-aqueous electrolyte made of a lithium compound dissolved into an organic solvent, wherein the material of said separator is a nonwoven fabric textile made of fabric polyolefin and the density of said separator is 0.4 to 0.85 g/ml.

It is preferable in the present invention that the density of the separator be 0.6 to 0.8 g/ml and that the thickness of the separator be 5 to 50 μm.

It is preferable in the present invention that the separator be obtained by compressing the nonwoven fabric textile and that the nonwoven fabric textile be mixed with an electrical insulating inorganic or organic substance and be compressed after the mixing.

It is preferable that the weighing capacity of the nonwoven fabric textile before the compression is 5 to 30 g/m$^2$.

It is also preferable in the present invention that the inorganic substance be an oxide and/or carbonate and that the inorganic substance be at least one type selected from a group consisting of alumina, calcia, magnesia, calcium carbonate, magnesium carbonate and zeolite.

It is also preferable in the present invention that the organic substance be at least one type selected from a group consisting of methylcellulose derivative, fluorine-based high polymer and rubber and that the organic substance be at least one type selected from a group consisting of carboxymethyl cellulose (CMC), polytetrafluoroethylene (PTFE), polyvinylidene fluoride (PVDF) and styrene-butadiene rubber (SBR).

It is preferable in the present invention that the organic solvent be a mixed solvent of ring-shaped carbonate and chain-shaped carbonate and that the positive electrode active material be a lithium manganate having a cubic system spinel structure whose main components are Li and Mn.

The lithium secondary cell according to the present invention is ideally applicable to a large cell having a capacity of 2 Ah or more and suitably used as a motor driving power supply for an electric vehicle or hybrid electric vehicle in which a high current is frequently discharged.

The present invention also provides a method of manufacturing a lithium secondary cell separator comprising:

compressing a nonwoven fabric textile made of fabric polyolefin to obtain a thin-film separator for a lithium secondary cell. It is preferable in the present invention that the nonwoven fabric textile support an inorganic substance or organic substance and that the supported body obtained be compressed.

It is also preferable in the present invention that the compression be performed under a temperature condition of 10 to 160°C and with a compression load of 10 to 100 t.

It is preferable in the present invention that the compression be performed with roll press and that when the nonwoven fabric textile is sent to the roll press, a feeding tension of 0.1 to 3 kg be applied to the nonwoven fabric textile. It is preferable in the present invention to use a nonwoven fabric textile made of fabric polyolefin having a weighing capacity of 5 to 30 g/m$^2$.

Brief Description of the Drawings

Fig. 1 is a graph plotting a limit discharge current (A) versus a contact ratio;
Fig. 2 is a graph plotting a limit discharge current (A) versus penetration rate (mg/min·cm$^2$);
Fig. 3 is a perspective view showing a structure of a wind type electrode body; and
Fig. 4 is a perspective view showing a structure of a laminate type electrode body.

Detailed Description of Preferred Embodiment

Embodiments of the present invention will be explained below. However, the present invention is not limited to the following embodiments but it should be construed that the design of the present invention can be modified or improved in various manners as appropriate without departing from the spirit and/or scope of the present invention based on the normal knowledge of the user.

A first aspect of the present invention is a method of evaluating an electrode body impregnated with a non-aqueous electrolyte comprising a positive electrode and negative electrode wound or laminated with a separator inserted in between, characterized in that a discharge limit of the electrode body is evaluated by affinity between the separator and non-aqueous electrolyte or an organic solvent composing the non-aqueous electrolyte.

The affinity of the non-aqueous electrolyte or organic solvent for this separator is evaluated with a reduction rate of a contact angle formed by the separator and the non-aqueous electrolyte or organic solvent measured immediately after forming drops of the non-aqueous electrolyte or organic solvent onto the surface of the porous film separator after a lapse of a certain time after the dropping. This will be explained in further detail below.

When the non-aqueous electrolyte or organic solvent is dropped onto the separator, drops are formed with a specific contact angle according to the magnitude of affinity for the separator. Furthermore, since the separator is a porous film, these drops infiltrate into micropores of the separator and the contact angle decreases with time. Therefore, the present invention compares the contact angle measured immediately after the dropping and that measured after a certain lapse of time and this result is used as an index of affinity between the separator and the non-aqueous electrolyte or organic solvent. In this way, the present invention makes it possible to evaluate an optimal combination between the separator and the non-aqueous electrolyte or organic solvent in a stage prior to assembly of the battery.

Furthermore, there is a correlation between the affinity between the separator and the non-aqueous electrolyte or organic solvent, that is, the reduction rate of the contact angle and the limit discharge current of the battery manufactured. Using the separator and non-aqueous electrolyte or organic solvent evaluated and selected in this way provides a lithium secondary cell with a large limit discharge current and higher output. Moreover, being capable of evaluating the battery characteristic beforehand without actually manufacturing the battery, the present invention also has the effect of improving manufacturing yields of the battery. The correlation between the reduction rate of the contact angle and the limit discharge current of the battery manufactured will be described later.

When a drop of the non-aqueous electrolyte or organic solvent is formed on the specimen separator and a tangent to the drop passing through the point at which the surface of the drop intersects the specimen separator is drawn, suppose the contact angle in the present invention refers to an angle including the drop formed by the tangent and the surface of the drop out of the angles formed by the tangent and specimen separator.

It is preferable in the evaluation method of the present invention that when a contact angle measured immediately after the dropping is $\theta_1$ and a contact angle measured 15 minutes after the dropping is $\theta_2$, a combination between the separator that satisfies a relation expressed in the following Expression (3) and the non-aqueous electrolyte or the organic solvent be decided to have good affinity.

$$(\theta_1 - \theta_2)/\theta_1 > 0.4 \qquad\qquad (3)$$

That is, using the separator showing such high affinity that satisfies the above-described Expression (5) and the non-aqueous electrolyte or organic solvent makes it possible to manufacture a lithium secondary cell with a high limit discharge current and higher output. Furthermore, to produce a further effect such as a greater limit discharge current for the lithium secondary cell using the electrode body evaluated using the evaluation method of the present invention, it is more preferable to satisfy the following Expression (4) and it is most preferable to satisfy the following Expression (5).

$$(\theta_1 - \theta_2)/\theta_1 > 0.45 \qquad\qquad (4)$$

$$(\theta_1 - \theta_2)/\theta_1 > 0.5 \qquad\qquad (4)$$

By the way, the upper limits of the numerical values shown in the above-described Expressions (3), (4) and (5) are not limited to particular ones, but they is generally preferable to be less than 0.9. This is because when the material of the separator is the same, the greater the reduction rate of the contact angle, the greater the pore diameter of the porous film separator is estimated to be and when the above-described numerical value is 0.9 or more, it will be disadvantageous in terms of electrical insulation.

The description "large limit discharge current" in the present invention means that the value is equal to or greater than the minimum limit discharge current value required for a lithium secondary cell to be mounted on a vehicle as a high output application, and more specifically it is generally acceptable if it has 30C (discharge rate) or more at about room temperature.

It is preferable in the evaluation method of the present invention that the contact angle measured immediately after dropping be 60° or less, more preferably 55° or less, and most preferably 50° or less. If the contact angle exceeds 60°, the wettability between the separator and non-aqueous electrolyte or organic solvent is too low and it is difficult for the lithium secondary cell using these substances to hold the electrolyte sufficiently in the separator and there may be adverse effects on the battery characteristics such as the battery capacity and cyclic characteristic, and is therefore not desirable. On the other hand, the lower limit of the contact angle is not limited to a particular one in the present invention, but it is preferable that the contact angle be approximately a value that will facilitate a comparison of the reduction rate of the contact angle immediately after the dropping and 15 minutes later and 10° or more is generally acceptable.

It is preferable in the present invention that the affinity between the separator and non-aqueous electrolyte or organic solvent composing the non-aqueous electrolyte be evaluated under a temperature condition of 10 to 40°C. This makes it possible to evaluate affinity more accurately with few errors, which in turn makes it possible to evaluate the discharge limit of the electrode body more accurately. From the standpoint of evaluating the discharge limit of affinity and electrode body more exactly, it is more preferable to evaluate under a temperature condition of 12 to 38°C and most preferable to evaluate under a temperature condition of 15 to 35°C.

A second aspect of the present invention is a method for evaluating an electrode body impregnated with a non-aqueous electrolyte comprising a positive electrode and negative electrode wound or laminated with a separator inserted in between, characterized in that a discharge limit of the electrode body is evaluated by permeability of the non-aqueous electrolyte or an organic solvent composing the non-aqueous electrolyte with respect to the separator.

The non-aqueous electrolyte or the organic solvent is contacted with the surface of the porous film separator and the permeability of the non-aqueous electrolyte or the organic solvent with respect to the separator is evaluated by the penetration rate of the non-aqueous electrolyte or the organic solvent expressed by the amount of the non-aqueous electrolyte or the organic solvent that has passed through the separator per unit time and per unit area. This will be explained in further detail below.

Since the separator is a porous film, when a sufficient amount of non-aqueous electrolyte or organic solvent contacts this surface, these penetrate the separator through micropores. Therefore, the present invention measures the penetration rate, that is, the amount of the non-aqueous electrolyte or organic solvent that has passed through the separator per unit time and per unit area and uses this result as an index of permeability of the non-aqueous electrolyte or organic solvent with respect to the separator.

There is a correlation between the permeability of the non-aqueous electrolyte or organic solvent with respect to the separator, that is, penetration rate and the limit discharge current of the battery manufactured. Using the separator evaluated and selected in this way provides a lithium secondary cell with a large limit discharge current and higher output. Moreover, being capable of evaluating the battery characteristic beforehand without actually manufacturing the battery, the present invention also has the effect of improving manufacturing yields of the battery. The correlation between the penetration rate and the limit discharge current of the battery will be described later.

The penetration rate referred to in the present invention is the amount of the non-aqueous electrolyte or organic solvent that passes through the separator downward per unit time and per unit area of the separator, which is the specimen, when the separator is set in the filter setting section by regarding the separator as a filter and then a sufficient amount of non-aqueous electrolyte or organic solvent composing the non-aqueous electrolyte is contacted with and placed on the separator.

Furthermore, it is preferable in the present invention that when the amount of the non-aqueous electrolyte or the organic solvent that has passed for a lapse of time of two or more is measured, the penetration rate be expressed by a gradient of a regression line formed by the measured amount of penetration of the non-aqueous electrolyte or organic solvent of two or more. That is, creating a regression line with amounts of penetration at many measuring points and calculating a gradient of the regression line makes it possible to measure the penetration rate more accurately, which in turn makes it possible to evaluate the discharge limit of the electrode body more accurately.

In the present invention, it is preferable that the discharge limit of the electrode body be decided to be good when the penetration rate is 0.25 mg/min·cm$^2$ or more, more preferably 2 mg/min·cm$^2$ or more and most preferably 50 mg/min·cm$^2$ or more. That is, using a separator with high permeability exceeding the above-described penetration rate makes it possible to manufacture a lithium secondary cell with a high limit discharge current and higher output.

The upper limit of penetration rate is not limited to a particular one in the present invention, but less than 15000 mg/min·cm$^2$ is generally acceptable. This is because when the material of the separator is the same, the greater the reduction rate of the contact angle, the greater the pore diameter of the porous film separator is estimated to be and when the above-described numerical value is 15000 mg/min·cm$^2$ or more, it will be disadvantageous in terms of electrical insulation.

It is preferable in the present invention that the permeability of the non-aqueous electrolyte or organic solvent composing the non-aqueous electrolyte with respect to the separator be evaluated under a temperature condition of 10 to 40°C. This makes it possible to evaluate permeability more accurately with few errors, which in turn makes it possible to evaluate the discharge limit of the electrode body more accurately. By the way, from the standpoint of evaluating permeability and the discharge limit of the electrode body more exactly, it is further preferable to evaluate under a temperature condition of 2 to 38°C and most preferable to evaluate under a temperature condition of 15 to 35°C.

In the evaluation method of the present invention, it is preferable to use olefin resin having micropores as the material for the separator. More specifically, it is preferable to use a Li$^+$-permeable polyethylene (PE) film having micropores, porous Li$^+$-permeable polypropylene (PP) film separately or a 3-layer structure with a PE film inserted between PP films.

The separator made of the above-described material also serves as a safety mechanism for preventing the movement of Li$^+$, that is, reaction of the battery by the PE film's softening at about 130°C and micropores' bursting when the temperature of the electrode body increases. With this PE film inserted between the PP films having a higher softening temperature, even if the PE film softens, the PP film can maintain its shape, prevent the positive electrode and negative electrode from contacting each other or short-circuiting and thereby secure the control of battery reactions and safety.

On the other hand, it is preferable in the evaluation method of the present invention that cellulose or cellulose derivative or paper made of a mixture of these materials be practically used as the material of the separator and more specifically it is preferable to use paper having micropores in an appropriate size. These materials are inexpensive, easy to obtain and have appropriate physical characteristics as the separator for the lithium secondary cell.

It is preferable in the evaluation method of the present invention that a lithium compound be used as the electrolyte to be dissolved into the organic solvent. The lithium compound includes lithium complex fluorine compound such as lithium hexafluoro phosphate (LiPF$_6$) or lithium fluoroborate (LiBF$_4$), or lithium halide compound such as lithium perchlorate (LiClO$_4$) and one, two or more types of these substances are dissolved into the above-described organic solvent (mixed solvent) for use. It is especially desirable to use LiPF$_6$ which is hardly subject to oxidation or decomposition and shows high conductivity in the non-aqueous electrolyte.

As a solvent used for the non-aqueous electrolyte in the present invention, carbonate-based organic solvent such as ethylene carbonate (EC), diethyl carbonate (DEC), dimethyl carbonate (DMC), propylene carbonate (PC) or individual solvent or mixed solvent such as ethyl acetate (EA), γ-butyrolactam, tetra-hydrofuran or acetonitrile is preferably used. Furthermore, the present invention can preferably use a mixed solvent of ring-shaped carbonate and chain-shaped carbonate from the standpoint of the solubility of the lithium compound which is the electrolyte and the operating temperature range, etc. of the battery in particular.

The composition and shape of the electrode body that can be evaluated by the evaluation method of the present invention is not limited to particular ones, but as will be explained in the embodiments later, the electrode evaluation method of the present invention is ideally applicable to evaluate a wind type electrode body and the electrode body of the lithium secondary cell as explained using a lithium secondary cell including a wind type electrode.

Then, a third aspect of the present invention will be explained. The third aspect of the present invention is a lithium secondary cell comprising an electrode body provided with a positive electrode made of a positive electrode active material and a negative electrode made of a negative electrode active material contained in a cell case, wound or laminated with a separator inserted in between and impregnated with a non-aqueous electrolyte made of a lithium compound dissolved into an organic solvent, characterized in that when the non-aqueous electrolyte or the organic solvent is dropped onto the separator and a contact angle measured immediately after the dropping is $\theta_1$ and a contact angle measured 15 minutes after the dropping is $\theta_2$, the separator and the non-aqueous electrolyte or the organic solvent satisfy a relation expressed in the following Expression (6). This will be explained in further detail below.

$$(\theta_1 - \theta_2)/\theta_1 > 0.4 \tag{6}$$

As described above, when the non-aqueous electrolyte or the organic solvent is dropped onto the separator, drops are formed with a specific contact angle and the contact angle decreases with time. The lithium secondary cell of the present invention is manufactured using reduction of the above-described contact angle with time as an index of affinity between the separator and the non-aqueous electrolyte or the organic solvent and using the separator and the non-aqueous electrolyte or the organic solvent that satisfy the above-described Expression (6). Since there is a correlation between the affinity between the separator and the non-aqueous electrolyte or organic solvent, that is, the reduction rate of the contact angle and the limit discharge current of the battery, the lithium secondary cell of the present invention features a large limit discharge current and higher output.

Moreover, being capable of evaluating the battery characteristic beforehand without actually manufacturing the battery, the present invention also improves manufacturing yields of the battery and provides a lithium secondary cell with consideration given to the manufacturing cost. The correlation between the reduction rate of the contact angle and the limit discharge current of the battery manufactured will be described later.

Furthermore, to have a further effect such as a high limit discharge current, it is preferable that the lithium secondary cell of the present invention satisfy the following Expression (7) and more preferably satisfy the following Expression (8).

$$(\theta_1 - \theta_2)/\theta_1 > 0.45 \tag{7}$$

$$(\theta_1 - \theta_2)/\theta_1 > 0.5 \tag{8}$$

The upper limits to the numerical values shown in the above-described Expressions (6), (7) and (8) are not limited to particular ones, but less than 0.9 is generally acceptable. This is because when the material of the separator is the same, the greater the reduction rate of the contact angle, the greater the pore diameter of the porous film separator is estimated to be and when the above-described numerical value is 0.9 or more, it will be disadvantageous in terms of electrical insulation.

It is preferable in the lithium secondary cell of the present invention that the contact angle measured immediately after dropping be 60° or less, more preferably 55° or less, and most preferably 50° or less. If the contact angle exceeds 60°, the wettability between the separator and non-aqueous electrolyte or organic solvent is too low and it is difficult for the lithium secondary cell using these substances to hold the electrolyte sufficiently in the separator and there may be adverse effects on the battery characteristics such as the battery capacity and cyclic characteristic, and is therefore not preferable. On the other hand, the lower limit of the contact angle is not limited to a particular one in the present invention, but it is preferable that the contact angle be approximately a value that will facilitate a comparison of the reduction rate of the contact angle immediately after the dropping and 15 minutes later and 10° or more is generally acceptable.

Next, a fourth aspect of the present invention will be explained. The fourth aspect of the present invention is a lithium secondary cell comprising an electrode body provided with a positive electrode made of a positive electrode active material and a negative electrode made of a negative electrode active material contained in a cell case, wound or laminated with a separator inserted in between and impregnated with a non-aqueous electrolyte made of a lithium compound dissolved into an organic solvent, characterized in that when the non-aqueous electrolyte or the organic solvent is contacted with the separator and the penetration rate of the non-aqueous electrolyte or the organic solvent expressed with the amount of the non-aqueous electrolyte or the organic solvent that has passed through the separator per unit time and per unit area is expressed with a gradient of a regression line formed of the amount of penetration of the non-aqueous electrolyte or the organic solvent measured for a lapse of time of two or more, the penetration rate is 0.25 mg/min·cm$^2$ or more. This will be explained in further detail below.

As described above, when the non-aqueous electrolyte or the organic solvent is contacted with or placed on the separator, these penetrate the separator through micropores. The lithium secondary cell of the present invention is manufactured using the amount of penetration of the non-aqueous electrolyte or the organic solvent that passes through the separator per unit time and per unit area, that is, the penetration rate as an index of permeability of the non-aqueous electrolyte or the organic solvent with respect to the separator and using a separator which has a permeability value equal to or higher than the above-described value. Here, since there is a correlation between the penetration rate and the limit discharge current of the battery manufactured, the lithium secondary cell of the present invention has characteristics of a high limit discharge current and higher output.

Moreover, being capable of evaluating the battery characteristic beforehand without actually manufacturing the battery, the present invention also improves manufacturing yields of the battery and provides a lithium secondary cell with consideration given to the manufacturing cost. The correlation between the penetration rate and the limit discharge current of the battery will be described later.

Furthermore, to have a further effect such as a high limit discharge current, it is preferable that the lithium secondary cell of the present invention have a penetration rate of 2 mg/min·cm$^2$ or more and more preferably 50 mg/min·cm$^2$ or more.

The upper limit of the penetration rate of the present invention is not limited to a particular one, but less than 15000 mg/min·cm$^2$ is generally acceptable. This is because when the material of the separator is the same, the greater the penetration rate, the greater the pore diameter of the porous film separator is estimated to be and when the above-described numerical value is 15000 mg/min·cm$^2$ or more, it will be disadvantageous in terms of electrical insulation.

Then, a fifth aspect of the present invention will be explained. The fifth aspect of the present invention is a lithium secondary cell comprising an electrode body provided with a positive electrode made of a positive electrode active material and a negative electrode made of a negative electrode active material contained in a cell case, wound or laminated with a separator inserted in between and impregnated with a non-aqueous electrolyte made of a lithium compound dissolved into an organic solvent, characterized in that the material of the separator is a nonwoven fabric textile made of fabric polyolefin and the density of the separator is 0.4 to 0.85 g/ml. This will be explained in further detail below.

It has been discovered that there is a correlation between the density of the separator made of a nonwoven fabric textile of fabric polyolefin and the limit discharge current of the lithium secondary cell manufactured using the separator. For this reason, the lithium secondary cell of the present invention manufactured using the separator whose density falls within a predetermined range is characterized by having a large limit discharge current.

Furthermore, since the nonwoven fabric textile made of fabric polyolefin is quite inexpensive and the separator manufactured using this is more inexpensive than a conventional separator. Therefore, the lithium secondary cell of the present invention manufactured using the separator is characterized by not only having a large limit discharge current but also reduced manufacturing cost.

When the density of the separator is less than 0.4 g/ml, it is not desirable because there is a possibility of an inner short circuit and if it is in excess of 0.8 µm, the limit. discharge current of the battery does not satisfy 30C (discharge rate) which is a least limit value required for the lithium secondary cell intended for use on a vehicle.

Furthermore, from the standpoint of providing a battery with no possibility of an internal short circuit, etc. and having a sufficient limit discharge current value, it is preferable that the density of the separator be 0.6 to 0.8 g/ml.

Then, a sixth aspect of the present invention will be explained. The sixth aspect of the present invention is a method of manufacturing a separator for a lithium secondary cell, characterized by obtaining a thin-film separator for the lithium secondary cell by compressing a nonwoven fabric textile made of fabric polyolefin. This will be explained in further detail below.

The nonwoven fabric textile made of fabric polyolefin is a porous film having multiple micropores in appropriate size, has electrical insulation and has a characteristic suitable for the material composing the separator for the lithium secondary cell. It is also available at low cost, making it possible to reduce the manufacturing cost of the separator and therefore the lithium secondary cell manufactured using the above-described separator.

It is preferable in the present invention that the nonwoven fabric textile support an inorganic substance or organic substance and the supported body obtained be compressed to obtain the thin-film separator. That is, it is possible to produce the effect of suppressing internal short circuits of the battery manufactured using the separator which is obtained by supporting an inorganic substance or organic substance.

Inorganic substances or organic substances supported have electric insulation and examples of inorganic substances include oxides such as alumina, calcia, magnesia and zeolite, and carbonates such as calcium carbonate and magnesium carbonate. Examples of organic substances include methylcellulose derivative such as carboxymethyl cellulose (CMC), fluorine-based high polymer such as polytetrafluoroethylene (PTFE), polyvinylidene fluoride (PVDF) and rubber such as styrene-butadiene rubber (SBR).

The following method is available as the method of mixing these inorganic or organic substances with the nonwoven fabric textile. First, an appropriate solvent is selected according to the physico-chemical characteristics of the inorganic or organic substances used. For example, water or ethanol, etc. is selected when an inorganic substance is used, and water or N-methyl-2-p pyrolidone, etc. is selected when an organic substance is used. The above-described inorganic or organic substance is added to these selected solvents in such a way as to obtain concentration of 2 to 30 weight % to prepare slurry. After immersing the nonwoven fabric textile made of fabric polyolefin in the slurry obtained and drying it, a supported body can be obtained. A dryer, etc. can be used for drying and drying can be performed within a temperature range of 50 to 120°C. A thin-film separator can be obtained by compressing the supported body obtained using appropriate compressing means.

There is a correlation between the permeability of the separator, that is, penetration rate and the limit discharge current of the battery manufactured using the separator. According to the method of manufacturing the separator for the above-described lithium secondary cell, it is possible to set the penetration rate of the separator to within a range of 50 to 5000 mg/min·cm$^2$. Therefore, the lithium secondary cell manufactured using the separator according to the method of manufacturing the separator for the above-described lithium secondary cell is characterized by having a high limit discharge current and higher output.

It is preferable in the present invention that the supported body consisting of an inorganic substance or organic substance supported by a nonwoven fabric textile be compressed under a temperature condition of 10 to 160°C and more preferably compressed under a temperature condition of 25 to 120°C. Compressing under a temperature condition of 10°C or less is not desirable because it is difficult to compress until the nonwoven fabric textile is plastic-deformed and compressing under a temperature condition in excess of 160°C is not desirable either because the nonwoven fabric textile is easily stuck to the compressing part such as a wind when compression is performed, for example, by such a method as roll press.

Furthermore, it is preferable in the present invention that the supported body consisting of an inorganic substance or organic substance supported by a nonwoven fabric textile be compressed with compressing load of 10 to 100 t, more preferably compressed with compressing load of 10 to 80 t and most preferably compressed with compressing load of 10 to 50 t. Compressing with compressing load less than 10 t is not desirable because it is difficult to compress until the nonwoven fabric textile is plastic-deformed and compressing with compressing load in excess of 100 t is not desirable either because the nonwoven fabric textile is easily stuck to the compressing part such as a wind when compression is performed, for example, by such a method as roll press.

It is preferable in the present invention that compression be performed using roll press. Roll press is a suitable and extremely simple method as the compression method for obtaining the thin-film separator and is desirable in the respect that it allows the separator to be adjusted to a desired thickness.

It is preferable in the present invention that when the supported body is sent to the roll press, a feeding tension of 0.1 to 3 kg be applied to the supported body, more preferably a feeding tension of 0.2 to 3 kg be applied to the supported body and most preferably a feeding tension of 0.2 to 1 kg be applied to the supported body. Applying a feeding tension less than 1 kg is not desirable because warpage is produced in the supported body and wrinkles may be easily produced on the separator obtained and applying a feeding tension in excess of 3 kg is not desirable either because problems may easily occur such as bursting or contraction of the separator.

Furthermore, it is preferable in the present invention to use a nonwoven fabric textile made of fabric polyolefin having a weight per unit area of the nonwoven fabric textile, that is, a weighing capacity of 5 to 30 g/m$^2$, more preferably to use a nonwoven fabric textile made of fabric polyolefin of 8 to 30 g/m$^2$ and most preferably to use a nonwoven fabric textile made of fabric polyolefin of 10 to 20 g/m$^2$. Using a nonwoven fabric textile made of fabric polyolefin having a weight per unit area less than 5 g/m$^2$ is not desirable because the separator obtained by compression is too thin and using a nonwoven fabric textile made of fabric polyolefin having a weight per unit area in excess of 30 g/m$^2$ is not desirable either because the separator obtained by compression is too thick. Therefore, compressing a nonwoven fabric textile whose weighing capacity falls within the above-described range makes it possible to obtain a separator of an optimal thickness.

Next, the main components, structure and method of manufacturing the lithium secondary cell will be explained taking a case of a wind type electrode as an example.

Fig. 3 is a perspective view showing a structure of a wind type electrode body. The positive electrode 2 is formed by applying a positive electrode active material to both sides of a collector substrate. As the collector substrate, a metallic foil with high corrosion resistance to positive electrode electro-chemical reactions such as an aluminum foil and titanium foil is used. Instead of foils, punching metal or mesh can also be used. Furthermore, as the positive electrode active material, a lithium transition metal compound oxide such as lithium manganese oxide (LiMn$_2$O$_4$), lithium cobalt oxide (LiCoO$_2$) or lithium nickel oxide (LiNiO$_2$) is preferably used. It is preferable to add carbon micro powder such as acetylene black to these positive electrode active materials as a conductive assistant.

Using a lithium manganese oxide having a cubic system spinel structure whose main components are Li and Mn (hereinafter simply referred to as "lithium manganese oxide") in the present invention is desirable because it can reduce the resistance of the electrode body compared to using other positive electrode active materials. Combining the above-described effect of improving characteristics of the non-aqueous electrolyte in the present invention with the effect of reducing this internal resistance is desirable because the effect of improving characteristics of the non-aqueous electrolyte becomes more conspicuous, further improving the cyclic characteristic of the battery.

The lithium manganese oxide is not limited to such a stoichiometrical composition, but it is also preferably used for lithium manganese oxides expressed with a general expression $LiM_xMn_{2-x}O_4$ (M: substitution element, X: amount of substitution) obtained by substituting one or more other elements for part of Mn. The Li/Mn ratio in the lithium manganese oxide subjected to such element substitution exceeds 0.5.

The substitution elements M (hereinafter expressed with element symbols) include Li, Fe, Mn, Ni, Mg, Zn, B, Al, Co, Cr, Si, Ti, Sn, P, V, Sb, Nb, Ta, Mo and W. Theoretically, Li becomes a +1-valent ion, Fe, Mn, Ni, Mg and Zn become +2-valent ions, B, Al, Co and Cr become +3-valent ions, Si, Ti and Sn become +4-valent ions, P, V, Sb, Nb and Ta become +5-valent ions, Mo and W become +6-valent ions, and these are elements dissolved into $LiMn_2O_4$. However, Co and Sn may also be +2-valent ions, Fe, Sb and Ti; may also be +3-valent ions, Mn may also be a +3- or +4-valent ion and Cr may also be a +4- or +6-valent ion.

Therefore, various substitution elements M may exist with mixed valences and the amount of oxygen need not necessarily be 4 as expressed with a stoichiometrical composition and can be missed within a range for maintaining the crystalline structure or can exist in excess.

Application of a positive electrode active material is performed by applying and drying slurry or paste prepared by adding a solvent or binder, etc. to the positive electrode active material powder to the collector substrate using a wind coater method, etc. and then applying pressing, etc. if necessary.

The negative electrode 3 can be created in the same way as for the positive electrode 2. As the collector substrate for the negative electrode 3, a metallic foil such as a copper foil or nickel foil, which has excellent corrosion resistance to negative electrode electrochemical reaction is preferably used. As the negative electrode active material, an amorphous carbon material such as soft carbon or hard carbon or high graphitized carbon powder such as artificial graphite or natural graphite is preferably used.

In the present invention, it is preferable to use olefin resin having micropores as the material for the separator 4. More specifically, it is preferable to use a $Li^+$-permeable PE film, porous $Li^+$-permeable PP film separately or a 3-layer structure with a PE film inserted between PP films.

The separator made of the above-described olefin resin having micropores also serves as a safety mechanism for preventing the movement of $Li^+$, that is, reaction of the battery by the PE film's softening at about 130°C and micropores' bursting when the temperature of the electrode body increases. With this PE film inserted between the PP films having a higher softening temperature, even if the PE film softens, the PP film can maintain its shape, prevent the positive electrode 2 and negative electrode 3 from contacting each other or short-circuiting and thereby secure the control of battery reactions and safety.

On the other hand, it is preferable in the present invention that cellulose or cellulose derivative or paper made of a mixture of these materials be practically used as the material of the separator 4 and more specifically it is preferable to use paper having micropores in an appropriate size. These materials are inexpensive, easy to obtain and have appropriate physical characteristics as the separator for the lithium secondary cell.

On the other hand, it is preferable in the present invention that the material of the separator be a nonwoven fabric textile made of fabric polyolefin and its penetration rate be 2 to 30000 mg/min·cm², more preferably 50 to 5000 mg/min·cm². A penetration rate less than 2 mg/min·cm² is undesirable because there is a possibility of internal short circuits. A penetration rate in excess of 30000 mg/min·cm² is undesirable because the limit discharge current of the battery will no longer satisfy 30C (discharge rate) which is the minimum limit value required for, for example, an on-vehicle lithium secondary cell.

Furthermore, it is preferable in the present invention that the thickness of the separator be 5 to 50 μm, more preferably 10 to 49 μm and most preferably 15 to 35 μm. Having a thickness less than 5 μm is not desirable because it is too thin causing a short circuit and using a thickness in excess of 50 μm is not desirable either because it is too thick and the limit discharge current of the battery will no longer satisfy 30C (discharge rate) which is the minimum limit value required for, for example, an on-vehicle lithium secondary cell.

Furthermore, when a nonwoven fabric textile made of fabric polyolefin is used as the material of the separator in the present invention, it is preferable to use the one obtained by compressing such a nonwoven fabric textile as the separator. Using the nonwoven fabric textile as is as the separator without compressing the nonwoven fabric textile may cause internal short circuits depending on the operating condition of the battery and in such a case there is a possibility that product yields will decrease due to self discharge defects and is therefore undesirable. Thus, using the appropriately compressed nonwoven fabric textile can avoid such a problem.

Furthermore, it is preferable in the present invention that the nonwoven fabric textile be mixed with an electrical insulating inorganic or organic substance. This has the effect of preventing an internal short circuit.

Here, it is preferable that the nonwoven fabric textile be compressed after it is mixed with the above-described inorganic and/or organic substance. This further enhances the effect of preventing internal short circuits.

Furthermore, it is preferable in the present invention that the weight per unit area of the nonwoven fabric textile before compression, that is, weighing capacity be 5 to 30 $g/m^2$, more preferably 8 to 30 $g/m^2$, and most preferably 10 to 20 $g/m^2$. A weighing capacity less than 5 $g/m^2$ is undesirable because the separator obtained by compression is too thin. On the other hand, a weighing capacity in excess of 30 $g/m^2$ is undesirable because the separator obtained by compression is too thick. Thus, compressing the nonwoven fabric textile whose weighing capacity falls within the above-described range provides a separator having an optimal thickness.

In the present invention, it is preferable to use an oxide and/or carbonate as the electrical insulating inorganic substance to be mixed with the nonwoven fabric textile from the standpoint of insulation and stability with respect to the electrolyte, and it is further preferable that the relevant inorganic substance be at least one type selectable from a group of alumina, calcia, magnesia, calcium carbonate, magnesium carbonate and zeolite from the standpoint of availability and ease of handling, etc.

On the other hand, it is preferable to use at least one type selectable from a group of methyl cellulose derivative, fluorine-based high polymer and rubber as the electrical insulating organic substance to be mixed with the nonwoven fabric textile from the standpoint of insulation and stability with respect to the electrolyte, and it is further preferable that the relevant organic substance be at least one type selectable from a group of carboxymethyl cellulose (CMC), polytetrafluoroethylene (PTFE), polyvinylidene fluoride (PVDF) and styrene-butadiene rubber (SBR) from the standpoint of availability and ease of handling, etc.

The following method can be used as the method for mixing the above-described inorganic or organic substance with the nonwoven fabric textile.

When the electrode plates 2 and 3 and separator 4 are wound, the electrode leads 5 and 6 are attached to the areas of the electrode plates 2 and 3 where no electrode active materials are applied and the collector substrate is exposed. As the electrode leads 5 and 6, foil-like leads made of the same material as that of the electrode plates 2 and 3 are preferably used. The electrode leads 5 and 6 can be attached to the electrode plates 2 and 3 using ultrasonic welding or spot welding, etc.

Then, the non-aqueous electrolyte used for the lithium secondary cell of the present invention will be explained. As the solvent, ethylene carbonate (EC), diethyl carbonate (DEC), dimethyl carbonate (DMC), propylene carbonate (PC) or individual solvent or mixed solvent such as γ-butyrolactam, tetra-hydrofuran or acetonitrile is preferably used. The present invention can preferably use a mixed solvent of ring-shaped carbonate and chain-shaped carbonate from the standpoint of the solubility of the lithium compound, which is the electrolyte, and the operating temperature range, etc. of the battery.

As the electrolyte, lithium complex fluorine compound such as lithium hexafluoro phosphate ($LiPF_6$) or lithium fluoroborate ($LiBF_4$), or lithium halide compound such as lithium perchlorate ($LiClO_4$) and one, two or more types of these substances are dissolved into the above-described organic solvent (mixed solvent) for use. It is especially desirable to use $LiPF_6$ which is hardly subject to oxidation or decomposition and shows high conductivity in the non-aqueous electrolyte.

Here, it is also possible to use a non-aqueous electrolyte subjected to heating processing in the present invention. In this case, it is desirable to subject the non-aqueous electrolyte to heating processing under inactive atmosphere. This can reduce to a minimum deterioration of the non-aqueous electrolyte due to oxidation and absorption of water content in the air. The above-described "inactive atmosphere" means, for example, that the system for subjecting the non-aqueous electrolyte to heating processing is filled with a general inactive gas, etc. Here, Ar or $N_2$ gas, etc. corresponds to this general inactive gas.

Assembly of the lithium secondary cell consists of inserting the wind type electrode 1 manufactured into the cell case and holding it in a stable position while securing conduction between the current lead-out terminals and electrode leads 5 and 6, then impregnating it with the above-described non-aqueous electrolyte and sealing the cell case. In this way, the lithium secondary cell according to the present invention is manufactured.

In the present invention, it is possible to use a separator with various different physical property parameters such as air permeability, porosity. Furthermore, with respect to the non-aqueous electrolyte, it is also possible to use one of various types and concentrations of the lithium compound, which is the electrolyte, and various types and composition ratios of the organic solvent. Furthermore, it is also possible to apply heating processing, etc. to the non-aqueous electrolyte, after it is prepared.

The lithium secondary cell according to the present invention has been explained mainly taking the case where a wind type electrode body is used as an example and presenting its embodiments. However, it goes without saying that the present invention is not limited to the above-described embodiments. Furthermore, the lithium secondary cell according to the present invention is ideally applicable to a large battery of a capacity in excess of 2 Ah in particular, but this does not prevent the present invention from being applied to a battery having a capacity smaller than this. Furthermore, the lithium secondary cell according to the present invention is preferably used as an on-vehicle battery taking advantage of its high capacity, low cost and high reliability or as a power supply to drive a motor of an electric vehicle or hybrid electric vehicle or to start an engine requiring a high voltage.

[Embodiments]

Then, results of specific embodiments of the present invention will be explained below.

(Embodiments 1 to 14, comparative examples 1 to 3)

1. Preparation of electrode body

Acetylene black as a conduction assistant is added to a $LiMn_2O_4$ spinel as the positive electrode active material at an approximate ratio of 4 weight %, to which a solvent and binder are added to prepare a positive electrode slurry. This positive electrode slurry is applied to both sides of an aluminum foil, 20 μm thick in such a way that the thickness of the positive electrode slurry on each side is approximately 100 μm, to create a positive electrode 2. On the other hand, carbon powder as the negative electrode active material is applied to both sides of a copper foil, 10 μm thick in such a way that the thickness of the negative electrode slurry on each side is approximately 80 μm, to create a negative electrode 3. Then, a wind type electrode body 1 shown in Fig. 3 is created using these electrode plates and the separators shown in Tables 1 and 2.

2. Preparation of non-aqueous electrolyte

Various organic solvents of EC, DMC, EMC, DEC and EA are mixed using types and composition ratios shown in Tables 1 and 2 to prepare a mixed solvent and electrolyte $LiPF_6$ is dissolved into this mixed solvent to prepare a non-aqueous electrolyte having a concentration of 1 mol/l.

Furthermore, the non-aqueous electrolytes obtained in Embodiment 2, comparative examples 1 and 2 are put into a polytetra-fluoroethylene recipient, subjected to heating processing under inactive atmosphere (Ar gas) at 60°C or 80°C for 30 days and then left standing until it cools down to 25°C.

3. Preparation of battery

After the wind type electrode body is housed in the cell case, the electrode body is filled with each non-aqueous electrolyte shown in Tables 1 and 2 prepared according to the method described in the field of preparation of the non-aqueous electrolytes in section 2 above, then the cell case is sealed and in this way a battery is manufactured (Embodiments 1 to 14, comparative examples 1 to 3). Suppose other parts and test environment are common to all specimens, the cell components are dried sufficiently until immediately before assembly of the battery to exclude influences such as infiltration of water from the outside of the battery due to insufficient sealing of the battery or other defects. The battery capacity after initial charging of all cells is approximately 8 Ah.

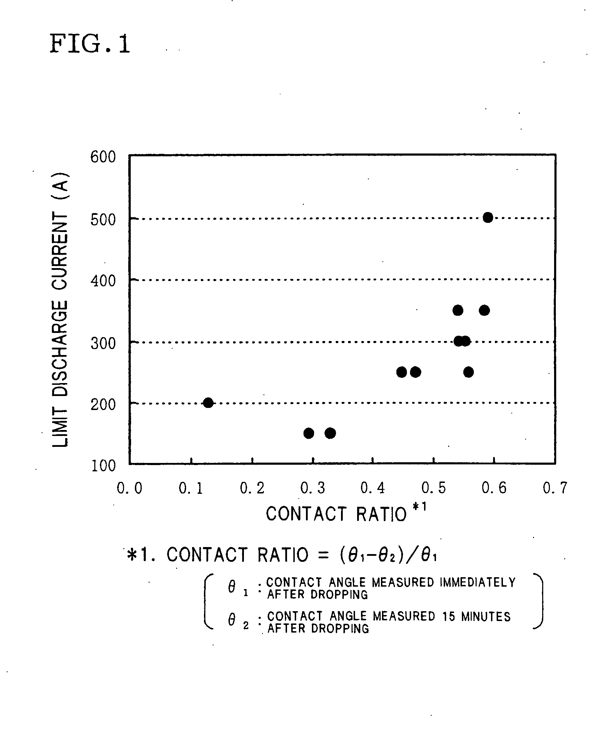

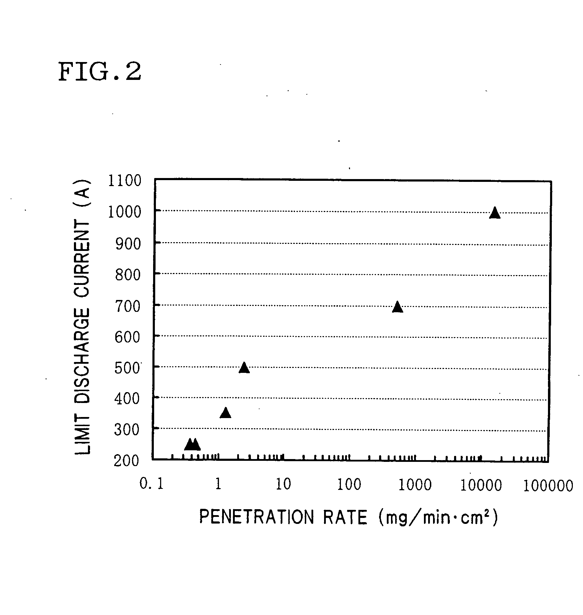

Tables 1 and 2 show limit discharge current (A), contact angle (°) of the separator used, contact angle ratio and penetration rate (mg/min·cm²) for each battery. Fig. 1 is a graph plotting limit discharge currents (A) versus contact angle ratios. Fig. 2 is a graph plotting limit discharge currents (A) versus penetration rates (mg/min·cm²).

[Table 1]

| | Separator | | | Non-aqueous electrolyte | | Limit discharge current (A) | Contact angle (°) | | Contact angle ratio *1 |
|---|---|---|---|---|---|---|---|---|---|
| | Structure | Air permeability (s/100 ml) | Porosity (%) | Mixed solvent composition (volume ratio) | Heating processing | | Just after drop | 15 minutes after drop | |
| Embodiment 1 | PP/PE/PP3 layer | 600 | 42 | EC:DMC:EMC=1:1:1 | -- | 250 | 43.38 | 23.04 | 0.47 |
| Comparative example 1 | PP/PE/PP3 layer | 600 | 42 | EC:DEC=1:1 | -- | 200 | 47.52 | 41.40 | 0.13 |
| Comparative example 2 | PP/PE/PP3 layer | 600 | 42 | EC:DEC=1:1 | 60°C × 30 days | 150 | 50.76 | 35.82 | 0.29 |
| Comparative example 3 | PP/PE/PP3 layer | 600 | 42 | EC:DEC=1:1 | 80°C × 30 days | 150 | 52.56 | 35.28 | 0.33 |
| Embodiment 2 | PP/PE/PP3 layer | 600 | 42 | EC:DMC:EMC=1:1:1 | 60°C × 30 days | 250 | 44.82 | 19.80 | 0.56 |
| Embodiment 3 | PP/PE/PP3 layer | 600 | 42 | EC:DMC:EMC:EA=1:1:1:5 | -- | 350 | 22.32 | 10.26 | 0.54 |
| Embodiment 4 | PP/PE/PP3 layer | 480 | 47 | EC:DMC:EMC=1:1:1 | -- | 300 | 43.56 | 19.98 | 0.54 |
| Embodiment 5 | PP/PE/PP3 layer | 400 | 47 | EC:DMC:EMC=1:1:1 | -- | 300 | 40.14 | 18.00 | 0.55 |
| Embodiment 6 | PE single layer | 250 | 49 | EC:DMC:EMC=1:1:1 | -- | 350 | 29.88 | 12.42 | 0.58 |
| Embodiment 7 | PE single layer | 550 | 45 | EC:DMC:EMC=1:1:1 | -- | 250 | 34.20 | 18.90 | 0.45 |
| Embodiment 8 | PP single layer | 880 | 42 | EC:DMC:EMC=1:1:1 | -- | 500 | 38.16 | 15.66 | 0.59 |

*1. Contact angle ratio = (contact angle measured immediately after dropping - contact angle measured 15 minutes after dropping)/ contact angle measured immediately after dropping

EP 1 255 319 A2

**EP 1 255 319 A2**

[Table 2]

| | Separator | | Mixed solvent composition of non- aqueous electrolyte (volume ratio) | Limit discharge current (A) | Penetration rate (mg/min·cm$^2$) |
|---|---|---|---|---|---|
| | Structure | Material | | | |
| Embodiment 9 | PP/PE/PP3 layer | Polyolefin | EC:DMC: EMC=1:1:1 | 250 | 0.45 |
| Embodiment 10 | PP single layer | Polyolefin | EC:DMC: EMC=1:1:1 | 500 | 2.375 |
| Embodiment 11 | PE single layer | Polyolefin | EC:DMC: EMC=1:1:1 | 250 | 0.365 |
| Embodiment 12 | PE single layer | Polyolefin | EC:DMC: EMC=1:1:1 | 350 | 1.285 |
| Embodiment 13 | Paper | Cellulose | EC:DMC: EMC=1:1:1 | 700 | 510 |
| Embodiment 14 | Nonwoven fabric cloth | Polyolefin | EC:DMC: EMC=1:1:1 | 1000 | 14500 |

(Embodiments 15 to 31, comparative examples 4 to 6)

4. Preparation of separator

Each compound shown in Table 3 is suspended at 10 weight % in a solvent (water for Embodiments 21 to 30, N-methyl-2-pyrrolidone for Embodiment 31) to prepare slurry. A nonwoven fabric textile made of the material (nonwoven fabric textile component) and having the weighing capacity (g/m$^2$) shown in Table 3 is immersed in the slurry obtained and then dried by a dryer at 80°C. The obtained dried product is subjected to compression processing (roll press) under the conditions shown in Table 3 and in this way a separator is prepared. Table 3 shows the thickness (μm) and density (g/ml) of each separator prepared. In Table 3, "PP/PE" denotes a nonwoven fabric textile having a 2-layer structure of PP and PE, "film-like 3 layers" denotes a film-like separator made up of one PE inserted between two PPs, which is not nonwoven fabric textile.

5. Preparation of electrode body

Acetylene black as a conduction assistant is added to a LiMn$_2$O$_4$ spinel as the positive electrode active material at an approximate ratio of 4 weight %, to which a solvent and binder are further added to prepare a positive electrode slurry. This positive electrode slurry is applied to both sides of an aluminum foil, 20 μm thick in such a way that the thickness of the positive electrode slurry on each side is approximately 100 μm to create a positive electrode 2. On the other hand, carbon powder as the negative electrode active material is applied to both sides of a copper foil, 10 μm thick in such a way that the thickness of the negative electrode slurry on each side is approximately 80 μm to create a negative electrode 3. Then, a wind type electrode body 1 shown in Fig. 3 is created using these electrode plates and the separators shown in Table 3 prepared using the method described in the field of preparation of the separator in section 4 above.

6. Preparation of non-aqueous electrolyte

Various organic solvents of EC, DMC and EMC are mixed at a volume ratio of 1:1:1 to prepare a mixed solvent and an electrolyte LiPF$_6$ is dissolved into this mixed solvent to prepare a non-aqueous electrolyte having a concentration of 1 mol/l.

7. Preparation of battery

After the wind type electrode body prepared according to the method described in the field of preparation of the electrode body in above-described section 5 is housed in the cell case, the electrode body is filled with the non-aqueous electrolyte prepared according to the method described in the field of preparation of the non-aqueous electrolytes in above-described section 6, then the cell case is sealed and in this way a battery is manufactured (Embodiments 15 to 31, comparative examples 4 to 6). Suppose other parts and test environment are common to all specimens, the cell components are dried sufficiently until immediately before assembly of the battery to exclude influences such as infiltration of water from the outside of the battery due to insufficient sealing of the battery and other defects. The battery capacity after initial charging of all cells is approximately 8 Ah.

Table 3 shows limit discharge current (A), resistance (MΩ) of the wind type electrode body used, thickness of the separator used (μm) and density (g/ml) for each battery.

EP 1 255 319 A2

[Table 3]

| | Nonwoven fabric cloth component | Weighing capacity $(g/m^2)$ | Mixture | Compression processing | Compression method | Compression load (t) | Compression temperature (°C) | Tension (kg) | Thickness (μm) | Density (g/ml) | Penetration rate $(mg/min \cdot cm^2)$ | Resistance of roll type electrode body (MΩ) | Limit discharge current (A) |
|---|---|---|---|---|---|---|---|---|---|---|---|---|---|
| Embodiment 15 | PP | 10 | No | No | -- | -- | -- | -- | 25 | 0.4 | 30000 | 20 | 1000 |
| Embodiment 16 | PP | 20 | No | No | -- | -- | -- | -- | 40 | 0.5 | 1750 | 35 | 800 |
| Embodiment 17 | PP/PE | 8 | No | Yes | Roll press | 10 | 25 | 1 | 13 | 0.6 | 15500 | >40 | 700 |
| Embodiment 18 | PP/PE | 20 | No | Yes | Roll press | 40 | 25 | 0.5 | 29 | 0.7 | 7000 | >40 | 600 |
| Embodiment 19 | PP | 20 | No | Yes | Roll press | 50 | 120 | 0.5 | 27 | 0.75 | 1650 | >40 | 500 |
| Embodiment 20 | PP | 30 | No | Yes | Roll press | 100 | 160 | 0.2 | 35 | 0.85 | 50 | >40 | 400 |
| Embodiment 21 | PP | 10 | Alumina | No | -- | -- | -- | -- | 25 | 0.4 | 7500 | >40 | 600 |
| Embodiment 22 | PP | 10 | Alumina | Yes | Roll press | 10 | 25 | 1 | 25 | 0.4 | 2000 | >40 | 500 |
| Embodiment 23 | PP | 10 | Calcia | Yes | Roll press | 10 | 25 | 1 | 25 | 0.4 | 2750 | >40 | 500 |
| Embodiment 24 | PP | 10 | Magnesia | Yes | Roll press | 10 | 25 | 1 | 25 | 0.4 | 1500 | >40 | 500 |
| Embodiment 25 | PP | 10 | Calcium carbonate | Yes | Roll press | 10 | 25 | 1 | 25 | 0.4 | 1500 | >40 | 500 |
| Embodiment 26 | PP | 10 | Magnesium carbonate | Yes | Roll press | 10 | 25 | 1 | 25 | 0.4 | 1750 | >40 | 500 |
| Embodiment 27 | PP | 10 | Zeolite | Yes. | Roll press | 10 | 25 | 1 | 25 | 0.4 | 2250 | >40 | 500 |
| Embodiment 28 | PP | 10 | CMC | Yes | Roll press | 10 | 25 | 1 | 25 | 0.4 | 2500 | >40 | 500 |
| Embodiment 29 | PP | 10 | PTFE | Yes | Roll press | 10 | 25 | 1 | 25 | 0.4 | 2750 | >40 | 500 |
| Embodiment 30 | PP | 10 | PVDF | Yes | Roll press | 10 | 25 | 1 | 25 | 0.4 | 2000 | >40 | 500 |
| Embodiment 31 | PP | 10 | SBR | Yes | Roll press | 10 | 25 | 1 | 25 | 0.4 | 1500 | >40 | 500 |
| Comparative example 4 | PP | 10 | No | No | -- | -- | -- | -- | 29 | 0.35 | 34500 | 0.003 | Large self discharge [1] |
| Comparative example 5 | PP | 35 | No | Yes | Roll press | 100 | 160 | 0.2 | 39 | 0.89 | 1 | >40 | 200 |
| Comparative example 6 | Film-like 3 layers | -- | No | No | -- | -- | -- | -- | -- | 0.53 | 0.35 | >40 | 150 |

*1. Not measurable

(Measurement and evaluation of physical properties)

8. Measurement of limit discharge current

When the discharge current for each fully charged battery is increased gradually, a maximum current value representing 80% or higher of the discharge capacity measured with a current equivalent to 1C (discharge rate) is used as a limit discharge current (A).

9. Evaluation of wettability (affinity) between separator and non-aqueous electrolyte

A separator of a predetermined shape and size is prepared and an appropriate amount of each non-aqueous electrolyte is dropped onto the surface of each separator to form liquid drops. The contact angle immediately after the dropping and the contact angle 15 minutes after the dropping are measured and their contact angle ratio is calculated. In the present invention, the "contact angle ratio" refers a value expressed in the following Expression (9) where the contact angle measured immediately after the dropping is $\theta_1$ and the contact angle measured 15 minutes after the dropping is $\theta_2$. The term "immediately after the dropping" in the present invention takes into account the procedure for measuring contact angles and denotes a time period within one minute immediately after a liquid drop is formed.

$$\text{Contact angle ratio} = (\theta_1 - \theta_2) / \theta_1 \qquad (9)$$

The "air permeability" in Table 1 refers to air permeability of a separator measured according to JIS P 8117. Likewise, the "porosity" in Table 1 refers to volume percentage of the porous area (area where no material exists) inside the separator calculated from the volume, weight and density of the specimen separator.

10. Measurement of contact angle

Contact angles are measured using a wettability test/solid-liquid contact angle measuring apparatus (manufactured by ULVAC Corp.). The measurement is performed as follows: Pictures of the separator onto which drops of the specimen non-aqueous electrolyte are dropped are taken from horizontal direction using a CCD camera and the pictures are input to a computer and analyzed using dedicated software.

11. Measurement of penetration rate

The separator is set in the area of a suction filter (SPC F with holder GF bottle, 47 mm, manufactured by SIBATA) where a filter would originally be set and a sufficient amount of a test solvent (EC:DMC:EMC = 1:1:1 (volume ratio)) is put into an upper solvent recipient placed above. Then, the amount of the test solvent that has penetrated is measured several times at arbitrary time intervals, the gradient of the amount of penetration versus the time elapsed is calculated and this is used as the penetration rate (mg/min·cm$^2$).

12. Measurement of resistance of wind type electrode body

A tester (model: 7533-03 (manufactured by Yokogawa Electric Corporation, measurement limit: 40 MΩ) is connected to the positive and negative electrode tabs (electrode leads) and the resistance (MΩ) of the wind type electrode body is measured.

(Considerations)

As shown in Table 1 and Fig. 1, it is apparent that there is a correlation between the contact angle ratio, that is, affinity between the separator and non-aqueous electrolyte, and the limit discharge current of the lithium secondary cell manufactured using them. Therefore, it has been discovered that the lithium secondary cell manufactured using the separator and non-aqueous electrolyte having high affinity selected using the method of evaluating the electrode body of the present invention is characterized by having a high limit discharge current. Furthermore, when the contact angle ratio is in excess of 0.4, the limit discharge current of the battery obtained is high (≥ 250 A) and the battery has high output.

Furthermore, as is apparent from Table 1, even if there are a variety of materials, penetration rates and porosity of the separator or compositions, etc. of the non-aqueous electrolyte, the present invention makes it possible to select an optimal combination.

Furthermore, as shown in Table 2 and Fig. 2, it is apparent that there is a correlation between the penetration rate, that is, permeability of the separator and the limit discharge current of the lithium secondary cell manufactured using them. Therefore, it has been discovered that the lithium secondary cell manufactured using the separator with high permeability selected using the method of evaluating the electrode body of the present invention is characterized by having a high limit discharge current. Furthermore, when the penetration rate is in excess of 0.25 mg/min·cm$^2$, the limit discharge current of the battery obtained is high ($\geq$ 250 A) and the battery has high output.

As is apparent from the result shown in Table 3, the lithium secondary cell whose separator consists of a nonwoven fabric textile made of fabric polyolefin and whose penetration rate falls within a predetermined range has a high limit discharge current ($\geq$ 400 A) and high output as well. Furthermore, it has also been discovered that the lithium secondary cell whose separator consists of a nonwoven fabric textile made of fabric polyolefin and whose density falls within a predetermined range has a high limit discharge current ($\geq$ 400 A) and high output as well.

As described above, the method of evaluating the electrode body of the present invention evaluates a discharge limit of the electrode body using affinity or permeability of the non-aqueous electrolyte or organic solvent for the separator, and can thereby select an optimal separator or an optimal combination between the non-aqueous electrolyte or organic solvent and the separator before manufacturing the lithium secondary cell.

Furthermore, the lithium secondary cell of the present invention is provided with the above-described evaluation method, that is, an electrode body manufactured using the separator and non-aqueous electrolyte selected by measuring wettability between the separator and non-aqueous electrolyte or organic solvent or permeability of the non-aqueous electrolyte or organic solvent with respect to the separator, and is therefore characterized by having a high limit discharge current and high output.

Furthermore, the method of manufacturing a separator for a lithium secondary cell of the present invention supports an inorganic or organic substance with a nonwoven fabric textile made of a certain material, compresses it and obtains a thin-film separator for a lithium secondary cell, and can thereby provide a lithium secondary cell with a high limit discharge current and high output at low manufacturing cost.

There is provided a method of evaluating an electrode body impregnated with a non-aqueous electrolyte, comprising a positive electrode and a negative electrode wound or laminated with a separator inserted in between. The discharge limit of the electrode body is evaluated by means of affinity of the non-aqueous electrolyte for the separator. This method is capable of selecting an optimal combination between a separator and non-aqueous electrolyte and evaluating a discharge limit of the electrode body before finally manufacturing a lithium secondary cell.

**Claims**

**1.** An evaluation method of an electrode body comprising:

providing the electrode body impregnated with a non-aqueous electrolyte comprising a positive electrode and a negative electrode wound or laminated with a separator inserted in between,
evaluating a discharge limit of said electrode body according to affinity between said separator and said non-aqueous electrolyte or an organic solvent composing said non-aqueous electrolyte.

**2.** The evaluation method of an electrode body according to claim 1, wherein a certain amount of said non-aqueous electrolyte or said organic solvent is dropped onto said separator and said affinity is evaluated by a reduction rate of a contact angle formed by said separator and said non-aqueous electrolyte or said organic solvent measured immediately after the dropping and after a certain lapse of time after the dropping.

**3.** The evaluation method of an electrode body according to claim 1 or 2, wherein when a contact angle measured immediately after said dropping is $\theta_1$ and a contact angle measured 15 minutes after said dropping is $\theta_2$, a combination between said separator that satisfies a relation expressed in the following Expression (10) and said non-aqueous electrolyte or said organic solvent is decided to be good affinity.

$$(\theta_1 - \theta_2)/\theta_1 > 0.4 \qquad (10)$$

**4.** The evaluation method of an electrode body according to claim 3, wherein the contact angle measured immediately after said dropping is 60° or less.

5. The evaluation method of an electrode body according to any one of claims 1 to 4, wherein said affinity is evaluated under a temperature condition of 10 to 40°C.

6. An evaluation method of an electrode body comprising:

   providing the electrode body impregnated with a non-aqueous electrolyte comprising a positive electrode and a negative electrode wound or laminated with a separator inserted in between,
   evaluating a discharge limit of said electrode body by permeability of said non-aqueous electrolyte or an organic solvent composing said non-aqueous electrolyte with respect to said separator.

7. The evaluation method of an electrode body according to claim 6, wherein said non-aqueous electrolyte or said organic solvent is contacted with said separator and said permeability is evaluated by the penetration rate of said non-aqueous electrolyte or said organic solvent expressed by the amount of said non-aqueous electrolyte or said organic solvent that has passed through said separator per unit time and per unit area.

8. The evaluation method of an electrode body according to claim 6 or 7, wherein the amount of said non-aqueous electrolyte or said organic solvent that has passed for a lapse of time of two or more is measured and said penetration rate is evaluated by a gradient of a regression line formed by said measured amount of penetration of two or more.

9. The evaluation method of an electrode body according to any one of claims 6 to 8, wherein the discharge limit of the electrode body is decided to be good when said penetration rate is 0.25 mg/min·cm$^2$ or more.

10. The evaluation method of an electrode body according to any one of claims 6 to 8, wherein the discharge limit of the electrode body is decided to be good when said penetration rate is 2 mg/min·cm$^2$ or more.

11. The evaluation method of an electrode body according to any one of claims 6 to 8, wherein the discharge limit of the electrode body is decided to be good when said penetration rate is 50 mg/min·cm$^2$ or more.

12. The evaluation method of an electrode body according to any one of claims 6 to 11, wherein said permeability is evaluated under a temperature condition of 10 to 40°C.

13. The evaluation method of an electrode body according to any one of claims 1 to 12, wherein olefin resin is used as the material of said separator.

14. The evaluation method of an electrode body according to any one of claims 1 to 12, wherein cellulose or cellulose derivative or paper made of a mixture of these materials is practically used as the material of said separator.

15. The evaluation method of an electrode body according to any one of claims 1 to 14, wherein a lithium compound is used as an electrolyte to be dissolved into said organic solvent.

16. The evaluation method of an electrode body according to claim 15, wherein LiPF$_6$ is used as said lithium compound.

17. The evaluation method of an electrode body according to any one of claims 1 to 16, wherein a mixed solvent of a ring-shaped carbonate and chain-shaped carbonate is used as said organic solvent.

18. The evaluation method of an electrode body according to any one of claims 1 to 17, wherein a wind type electrode body is used as said electrode body.

19. The evaluation method of an electrode body according to any one of claims 1 to 18, wherein the electrode body of a lithium secondary cell is evaluated.

20. A lithium secondary cell comprising:

   a cell case, and
   an electrode body provided with a positive electrode made of a positive electrode active material and a negative electrode made of a negative electrode active material contained in the cell case, wound or laminated with a separator inserted in between and impregnated with a non-aqueous electrolyte made of a lithium compound dissolved into an organic solvent,

wherein when said non-aqueous electrolyte or said organic solvent is dropped onto said separator and a contact angle measured immediately after the dropping is $\theta_1$ and a contact angle measured 15 minutes after the dropping is $\theta_2$, said separator and said non-aqueous electrolyte or said organic solvent satisfy a relation expressed in the following Expression (11).

$$(\theta_1 - \theta_2)/ \theta_1 > 0.4 \tag{11}$$

21. The lithium secondary cell according to claim 20, wherein the contact angle measured immediately after said dropping is 60° or less.

22. A lithium secondary cell comprising:

a cell case, and
an electrode body provided with a positive electrode made of a positive electrode active material and a negative electrode made of a negative electrode active material contained in the cell case, wound or laminated with a separator inserted in between and impregnated with a non-aqueous electrolyte made of a lithium compound dissolved into an organic solvent,

wherein when said non-aqueous electrolyte or said organic solvent is contacted with said separator and the penetration rate of said non-aqueous electrolyte or said organic solvent expressed with the amount of said non-aqueous electrolyte or said organic solvent that has passed through said separator per unit time and per unit area is expressed with a gradient of a regression line formed by the amount of said non-aqueous electrolyte or said organic solvent that has passed which is equal to 2 or more measured for a lapse of time equal to 2 or more, said penetration rate is equal to or more than 0.25 mg/min·cm$^2$.

23. The lithium secondary cell according to claim 22, wherein said penetration rate is equal to or more than 2 mg/min·cm$^2$.

24. The lithium secondary cell according to claim 22, wherein said penetration rate is equal to or more than 50 mg/min·cm$^2$.

25. The lithium secondary cell according to any one of claims 20 to 24, wherein the material of said separator is olefin resin.

26. The lithium secondary cell according to any one of claims 20 to 24, wherein the material of said separator is substantially cellulose or cellulose derivative or paper made of a mixture of these materials.

27. The lithium secondary cell according to claim 22, wherein the material of said separator is a nonwoven fabric textile made of fabric polyolefin and said penetration rate is 2 to 30000 mg/min·cm$^2$.

28. The lithium secondary cell according to claim 22, wherein the material of said separator is a nonwoven fabric textile made of fabric polyolefin and said penetration rate is 50 to 5000 mg/min·cm$^2$.

29. A lithium secondary cell comprising:

a cell case, and
an electrode body provided with a positive electrode made of a positive electrode active material and a negative electrode made of a negative electrode active material contained in the cell case, wound or laminated with a separator inserted in between and impregnated with a non-aqueous electrolyte made of a lithium compound dissolved into an organic solvent,

wherein the material of said separator is a nonwoven fabric textile made of fabric polyolefin and the density of said separator is 0.4 to 0.85 g/ml.

**30.** The lithium secondary cell according to claim 29, wherein said density is 0.6 to 0.8 g/ml.

**31.** The lithium secondary cell according to any one of claims 27 to 30, wherein the thickness of said separator is 5 to 50 μm.

**32.** The lithium secondary cell according to any one of claims 27 to 31, wherein said separator is obtained by compressing said nonwoven fabric textile.

**33.** The lithium secondary cell according to any one of claims 27 to 32, wherein said nonwoven fabric textile is mixed with an electrical insulating inorganic or organic substance.

**34.** The lithium secondary cell according to claim 33, wherein said nonwoven fabric textile is mixed with said inorganic or organic substance and then compressed.

**35.** The lithium secondary cell according to any one of claims 32 to 34, wherein the weighing capacity of said nonwoven fabric textile before the compression is 5 to 30 g/m$^2$.

**36.** The lithium secondary cell according to any one of claims 33 to 35, wherein said inorganic substance is an oxide and/or carbonate.

**37.** The lithium secondary cell according to any one of claims 33 to 35, wherein said inorganic substance is at least one type selected from a group of alumina, calcia, magnesia, calcium carbonate, magnesium carbonate and zeolite.

**38.** The lithium secondary cell according to any one of claims 33 to 35, wherein said organic substance is at least one type selected from a group of methyl cellulose derivative, fluorine-based high polymer and rubber.

**39.** The lithium secondary cell according to any one of claims 33 to 35, wherein said organic substance is at least one type selected from a group of carboxymethyl cellulose (CMC), polytetrafluoroethylene (PTFE), polyvinylidene fluoride (PVDF) and styrene-butadiene rubber (SBR).

**40.** The lithium secondary cell according to any one of claims 20 to 39, wherein said lithium compound is LiPF$_6$.

**41.** The lithium secondary cell according to any one of claims 20 to 40, wherein said organic solvent is a mixed solvent of ring-shaped carbonate and chain-shaped carbonate.

**42.** The lithium secondary cell according to any one of claims 20 to 41, wherein said positive electrode active material is a lithium manganate having a cubic system spinel structure whose main components are Li and Mn.

**43.** The lithium secondary cell according to any one of claims 20 to 42, wherein the capacity of the cell is 2 Ah or more.

**44.** The lithium secondary cell according to any one of claims 20 to 43, which is to be mounted on a vehicle.

**45.** The lithium secondary cell according to claim 44, which is to be used for an electric vehicle or hybrid electric vehicle.

**46.** The lithium secondary cell according to claim 44 or 45, which is to be used to start an engine.

**47.** A method of manufacturing a lithium secondary cell separator comprising:

compressing a nonwoven fabric textile made of fabric polyolefin to obtain a thin-film separator for a lithium secondary cell.

**48.** The method of manufacturing a lithium secondary cell separator according to claim 47, wherein an inorganic substance or organic substance is supported with said nonwoven fabric textile and the supported body obtained is compressed.

**49.** The method of manufacturing a lithium secondary cell separator according to claim 47 or 48, wherein said compression is performed under a temperature condition of 10 to 160°C.

**50.** The method of manufacturing a lithium secondary cell separator according to any one of claims 47 to 49, wherein said compression is performed with a compression load of 10 to 100 ton.

**51.** The method of manufacturing a lithium secondary cell separator according to any one of claims 47 to 50, wherein said compression is performed with roll press.

**52.** The method of manufacturing a lithium secondary cell separator according to claim 51, wherein when said supported body is sent to the roll press, a feeding tension of 0.1 to 3 kg is applied to said supported body.

**53.** The method of manufacturing a lithium secondary cell separator according to any one of claims 47 to 52, wherein a nonwoven fabric textile made of fabric polyolefin having a weighing capacity of 5 to 30 g/m$^2$ is used.

# FIG.1

*1. CONTACT RATIO $= (\theta_1 - \theta_2)/\theta_1$

$\left( \begin{array}{l} \theta_1 : \text{CONTACT ANGLE MEASURED IMMEDIATELY AFTER DROPPING} \\ \theta_2 : \text{CONTACT ANGLE MEASURED 15 MINUTES AFTER DROPPING} \end{array} \right)$

FIG.2

FIG.3

FIG.4